# EUROPEAN PATENT SPECIFICATION

(11) **EP 4 319 975 B1**
(45) Date of publication and mention of the grant of the patent: **19.02.2025**
(21) Application number: 22721294.1
(22) Date of filing: 06.04.2022
(51) Int. Cl.: B32B 3/04, B32B 5/30, B32B 27/28, B32B 27/12, B32B 7/02, B32B 5/16, B32B 5/02, B32B 27/08, B32B 27/14

(54) **PANEL AND METHOD FOR MANUFACTURING THEREOF**
PANEEL UND VERFAHREN ZUR HERSTELLUNG DAVON
PANNEAU ET SON PROCÉDÉ DE FABRICATION

(30) Priority: 07.04.2021 EP 21167263
(43) Date of publication of application: 14.02.2024
(73) Proprietor: Plantics Holding B.V., 6827 AV Arnhem (NL)
(72) Inventor: BAKKER, Wridzer Jan Willem, 6814 JT Arnhem (NL); GERARDIN, Lucas, 6827 AV Arnhem (NL)
(74) Representative: De Vries & Metman
(86) International application number: PCT/EP2022/059138
(87) International publication number: WO 2022/214552

(56) References cited:
- EP-A1- 3 034 555
- WO-A1-2012/140237
- WO-A1-2012/140239
- WO-A1-2021/023495

## Description

### TECHNICAL FIELD OF THE INVENTION

The present invention relates to a panel, in particular a sandwich panel, and a method of manufacturing the panel.

### BACKGROUND AND SUMMARY OF THE INVENTION

There is increased interest in the market (for example, in the fields of furniture, transportation, and construction and building), in articles derived from renewable resources, in particular from bio-based resources. In addition to being derivable from renewable resources, these articles should ideally combine an attractive, natural look and feel with good strength and durability properties. The art describes various efforts to attain this purpose.

WO 2012/140237, for example, describes methods for manufacturing a composite material comprising 10-98 wt.% of a bio-based particulate or fibrous filler and at least 2 wt.% of a bio-based polyester, wherein the method comprises combining the filler and the polyester (or a precursor thereof), and subjecting the combination to a curing step.

WO 2012/140238 describes a method for manufacturing laminates. A carrier is coated with a layer of a bio-based polyester. The composite is then cured to give a laminate comprising a carrier and a coating layer. The carrier is, generally, a wood slab. Various carried layers may be glued together using the polyester.

WO 2021/023495 describes laminates comprising a panel and a carrier provided with a bio-based polyester. The panel is, generally, made of wood. The carrier layers (not calculating the polyester) have an areal weight of 5-200 g/m². They are intended to either provide good surface properties to the laminate, e.g., hardness or a desired surface appearance, e.g., by providing a desired color, pattern, print, or texture, or to function as glue between individual panel layers.

EP 3034555 describes curable formaldehyde-free resin dispersions for the manufacture of mineral fiber products, such as mineral wool insulating products.

It is an object of the invention to provide sustainable panels with good properties, such as good flexural strength, hardness, and/or water resistance, that can be relatively inexpensive and light, that are easy to manufacture, do not contain harmful chemical components, and that have an attractive appearance. The panels according to the invention may find application as materials in furniture, e.g., kitchens, cupboards, and tabletops, and other areas (such as construction and building, and transportation).

In an aspect, the invention relates to a panel comprising a core layer and at least one surface layer bonded to the core layer, wherein the core layer comprises particulate material bonded with a resin and the surface layer comprises fibrous material bonded with a resin, the resins comprising a polymer derived from an aliphatic polyol with 2-15 carbon atoms and an aliphatic polycarboxylic acid with 3 to 15 carbon atoms, wherein the polymer has an extent of polymerization, determined gravimetrically, of at least 0.6, and wherein the ratio of the resin content (in wt.%) of the core layer to the total resin content (in wt.%) of the surface layer(s) is in the range of 1:1.5 to 1:15.

The panel according to the invention contains two distinct layers, a core layer and a surface layer. Typically, the core layer is the layer that provides bulk to the panel, but is also the weakest. The inventors have found that the core layer can be structurally supported by at least one surface layer, preferably two surface layers sandwiching the core layer. Surprisingly, even a very thin surface layer can provide the panel with good flexural strength and hardness, as demonstrated in the Examples.

The composite materials described in WO 2012/140237 do not have a structure comprising a core layer comprising a particulate material and at least one surface layer comprising a fibrous material.

The laminates described in WO 2012/140238 also do not provide a panel comprising a surface layer comprising a fibrous material and a resin as defined herein. Instead, the laminate of WO 2012/140238 comprises a coating of (only) a polymer derived from an aliphatic polyalcohol and a tricarboxylic acid. Such coatings can be hard, but have a much lower flexural strength than composites of a fibrous material and a resin as defined herein.

The laminates described in WO 2021/023495 does not describe a panel containing a resin comprising a polymer as defined herein. Indeed, the panels described therein are only described in very general terms. The panels are coated with a carrier layer of a low areal weight. The examples show that the carrier layer is, generally, paper coated with a polyester. Accordingly, the carrier layer described in WO 2021/023495 is not particularly suitable to provide structural stability, in contrast to the surface layer(s) as described herein.

In another aspect, the invention pertains to a method of manufacturing a panel according to the invention comprising the steps of
- providing a core layer base by combining particulate material and polymer derived from an aliphatic polyol with 2-15 carbon atoms and an aliphatic polycarboxylic acid with 3-15 carbon atoms, or precursors thereof;
- optionally, curing the core layer base under pressure to form a core layer comprising polymer with an extent of polymerization of at least 0.6;
- providing a surface layer base by combining fibrous material and polymer derived from an aliphatic polyol with 2-15 carbon atoms and an aliphatic polycarboxylic acid with 3-15 carbon atoms, or precursors thereof;
- combining the core layer base or core layer and at least one surface layer base to form a layered structure; and
- subjecting the layered structure to a curing step under pressure, wherein the curing step comprises curing the layered structure at an internal temperature of 100 to 220 °C for 5 seconds to 12 hours, to obtain a panel comprising polymer having an extent of polymerization, determined gravimetrically, of at least 0.6.

### BRIEF DESCRIPTION OF THE DRAWINGS

Fig. 1 shows a panel according to the invention, into the core layer of which a screw has been inserted. This demonstrates the panel can be modified and is useful as a material in construction.
Fig. 2 shows a prototype kitchen cupboard made of panels according to the invention. The figure shows that hinges can be reliably attached to the surface layer of the panel.
Figs. 3 and 4 show panels obtained using the method according to Example 4.
Fig. 5 shows a panel obtained using the method according to Example 5.

### DETAILED DESCRIPTION

### Panel

As mentioned above, the invention relates to a panel comprising a core layer and at least one surface layer bonded to the core layer, wherein the core layer comprises particulate material bonded with a resin and the surface layer comprises fibrous material bonded with a resin, the resins comprising a polymer derived from an aliphatic polyol with 2-15 carbon atoms and an aliphatic polycarboxylic acid with 3 to 15 carbon atoms, wherein the polymer has an extent of polymerization, determined gravimetrically, of at least 0.6, and wherein the ratio of the resin content (in wt.%) of the core layer to the total resin content (in wt.%) of the surface layer(s) is in the range of 1:1.5 to 1:15.

The panel may comprise two surface layers between which the core layer is sandwiched. Accordingly, the core layer may be arranged between two surface layers. The use of this 'sandwich' construction is advantageous, because both surface layers will provide structural support and attractive surface properties to the core layer. The core layer may also be at least partially enveloped by one or more surface layers, such that the sides of the panel are also covered with surface layer(s).

The nature of resin, the fibrous materials and the particulate materials used in the panel according to the invention are discussed in detail below. It will be evident to the skilled person that different embodiments of the present invention can be combined, unless they are mutually exclusive.

When amounts, concentrations, dimensions and other parameters are expressed in the form of a range, a preferable range, an upper limit value, a lower limit value or preferable upper and lower limit values, it should be understood that any ranges obtainable by combining any upper limit or preferable value with any lower limit or preferable value are also specifically disclosed, irrespective of whether the obtained ranges are clearly mentioned in the context. In addition, it should be understood that all percentages mentioned herein are weight percentages, unless specified otherwise.

### The resin

The panel according to the invention comprises a resin comprising a polymer derived from an aliphatic polyalcohol with 2-15 carbon atoms and an aliphatic polycarboxylic acid with 3-15 carbon atoms.

The aliphatic polyalcohol does not comprise any aromatic moieties, nitrogen atoms or sulphur atoms. In some embodiments, the aliphatic polyalcohol consists essentially of carbon, oxygen and hydrogen atoms. The aliphatic polyalcohol comprises at least two hydroxyl groups, preferably at least three hydroxyl groups. In general, the number of hydroxyl groups will be 10 or fewer, preferably 8 or fewer, more preferably 6 or fewer.

The aliphatic polyalcohol has 2 to 15 carbon atoms, preferably 3 to 10 carbon atoms. Examples of suitable aliphatic polyalcohols are 1 ,2-propane diol, 1,3-propane diol, 1,2-ethane diol, glycerol, sorbitol, xylitol, and mannitol. Glycerol, sorbitol, xylitol, and mannitol are preferred examples of suitable aliphatic polyalcohols. Glycerol is the most preferred example of a suitable aliphatic polyalcohol. This is because glycerol has a melting point of 20 ºC, which allows easy processing (compared to, e.g., xylitol, sorbitol, and mannitol, which all have melting points above 90 ºC). Moreover, glycerol is easily accessible and results in polymers having desirable properties. Accordingly, in some embodiments, the aliphatic polyalcohol consists essentially of glycerol. As used herein, "consists essentially of" means that other components (here: other aliphatic polyalcohols) may be present in amounts that do not affect the properties of the material.

Mixtures of different aliphatic polyalcohols may also be used. The aliphatic polyalcohol may comprise at least 50 mol% of glycerol, sorbitol, xylitol, or mannitol, preferably at least 70 mol%, preferably at least 90 mol%. Preferably, the balance is an aliphatic polyalcohol having 3 to 10 carbon atoms. The polyalcohol preferably comprises at least 70 mol% of glycerol, preferably at least 90 mol%, more preferably at least 95 mol%.

In some embodiments, the aliphatic polyalcohol has a ratio of hydroxyl groups over the number of carbon atoms from 1:4 (i.e., one hydroxyl group per four carbon atoms) to 1:1 (i.e., one hydroxyl group per carbon atom). It is preferable for the ratio of hydroxyl groups over the number of carbon atoms to be from 1:3 to 1:1, more preferably from 1:2 to 1:1, still more preferably from 1:1.5 to 1:1. Compounds wherein the ratio of hydroxyl groups to carbon atoms is 1:1 are considered especially preferred.

The aliphatic polycarboxylic acid has 3 to 15 carbon atoms, preferably 3 to 10 carbon atoms. The aliphatic polycarboxylic acid does not comprise aromatic moieties, or any nitrogen or sulphur atoms. In some embodiments, the aliphatic polycarboxylic acid consists of carbon, oxygen and hydrogen atoms. The aliphatic polycarboxylic acid comprises at least two carboxylic acid groups, preferably three carboxylic acid groups. In general, the number of carboxylic acid groups will be 10 or fewer, preferably 8 or fewer, more preferably 6 or fewer.

The aliphatic polycarboxylic acid comprises at least 10 wt.% of tricarboxylic acid, calculated on the total amount of aliphatic polycarboxylic acid. The aliphatic polycarboxylic acid may comprise at least 30 wt.% of tricarboxylic acid, calculated on the total amount of acid, preferably at least 50 wt.%, more preferably at least 70 wt.%, still more preferably at least 90 wt.%, most preferably 95 wt.%. In some embodiments, the aliphatic polycarboxylic acid consists essentially of tricarboxylic acid, preferably essentially of citric acid.

The aliphatic polycarboxylic acid may be a mixture of acids, such as a mixture of tricarboxylic acid(s) and dicarboxylic acid(s). In some embodiments, the aliphatic polycarboxylic acid comprises a combination of at least 2 wt.%, preferably at least 5 wt.%, more preferably at least 10 wt.% dicarboxylic acid and at least 10 wt.%, preferably at least 30 wt.%, more preferably at least 70 wt.%, still more preferably at least 90 wt.%, most preferably at least 95 wt.% tricarboxylic acid, calculated on the total amount of aliphatic polycarboxylic acid.

The dicarboxylic acid, if used, may be any dicarboxylic acid which has two carboxylic acid groups and, in general, at most 15 carbon atoms. Examples of suitable dicarboxylic acids include itaconic acid, malic acid, succinic acid, glutaric acid, adipic acid, sebacic acid and oxalic acid. Itaconic acid and succinic acid may be preferred. In one embodiment a tricarboxylic acid is used. The tricarboxylic acid, if used, may be any tricarboxylic acid which has three carboxylic acid groups and, in general, at most 15 carbon atoms. Examples include citric acid, isocitric acid, aconitic acid (both cis and trans), and 3-carboxy-cis,cis-muconic acid. The use of citric acid is considered preferred, both for reasons of costs and of availability.

The aliphatic polyalcohol and the aliphatic polycarboxylic acid used in the process according to the invention can react to form polymers.

The polymer can be obtained by combining the polyalcohol and the polycarboxylic acid (and, optionally, a polymer derived from polyalcohol and polycarboxylic acid) to form a liquid phase and, if necessary, curing the obtained liquid phase to a desired degree. Depending on the nature of the compounds this can be done, e.g., by heating a mixture of components to a temperature where the acid will dissolve in the alcohol, in particular in glycerol. Depending on the nature of the compounds the temperature may be, e.g., a temperature in the range of 20 ºC to 200 ºC, preferably 40 ºC to 200 ºC, more preferably 60 ºC to 200 ºC, most preferably 90 ºC to 200 ºC. In some embodiments, the combination may be heated and mixed for a period of 5 minutes to 12 hours, preferably 10 minutes to 6 hours. Specific conditions for (pre)curing the polymer may apply in different steps of the process described herein, e.g., the step of manufacturing the liquid resin to be contacted with the further components that will make up the core or surface layers, the steps of manufacturing the core layer or core base layer or surface layer, and the step of curing the layered structure. Specific curing conditions are described below for the various steps.

Optionally, a suitable catalyst can be used for the preparation of the polymer. Suitable catalysts for the manufacture of polymer are known in the art. Preferred catalysts are those that do not contain heavy metals. Useful catalysts are strong acids like, but not limited to, hydrochloric acid, hydroiodic acid and hydrobromic acid, sulfuric acid (H₂SO₄), nitric acid (HNOs), chloric acid (HClO₃), boric acid, perchloric acid (HClO₄), trifluoroacetic acid, and trifluoromethanesulfonic acid. Boric acid may be preferred. Catalysts like Zn-acetate and Mn-acetate can also be used, but may be less preferred.

Optionally, after polymerization and cooling of the reaction mixture, the mixture can be (partially) neutralized with a volatile base like ammonia or an organic amine to stabilize the polymer solution. Preferred organic amines are amines with a low odour, such as, but not limited to, 2-amino-2-ethyl-1,3-propanediol, 2-amino-2-methyl-1-propanol, and 2-dimethyl-amino-2-methyl-1-propanol.

When newly obtained, the polymer may have an extent of polymerization between 0.10 and 0.60, preferably between 0.20 and 0.60, more preferably between 0.30 and 0.60. In the present specification, the "extent of polymerization" is the ratio of the fraction of functional groups that have reacted at a certain point in time to the maximum of the functional groups that can react. For example, if no monomers have reacted, the extent of polymerization is 0. The extent of polymerization can be determined using gravimetric analysis (from the water loss that occurs during the polymerization reaction). A detailed explanation of how the extent of polymerization of a polymer as defined herein can be determined is provided in Example 1. It will be evident that, in order to determine the extent of polymerization of a polymer derived from an aliphatic polyol and an aliphatic polycarboxylic acid with an unknown extent of polymerization, a sample of the polymer with an unknown extent of polymerization is cured at a temperature from 100 to 220 °C until no more water is lost. The extent of polymerization of the polymer is then 1, allowing one to calculate back the extent of polymerization of the sampled polymer using the water lost during the curing, in a manner similar to the manner described in Example 1.

In the panel, the polymer derived from the aliphatic polyalcohol and the aliphatic polycarboxylic acid may have an extent of polymerization of at least 0.6, in particular at least 0.7, more in particular at least 0.8, even more in particular at least 0.9, still more in particular 1.

If desired, the resin as it will be used in the manufacture of the panel can be diluted to control the viscosity of the resin. For example, the resin can be diluted with water. This may done to facilitate impregnation of the one or more layers of fibrous material with the resin. In some embodiments, the viscosity of the resin may be between 1·10³ Pa·s and 50 Pa·s, preferably between 0.05 Pa·s and 2.5 Pa·s, more preferably between 0.1 Pa·s and 0.15 Pa·s (at room temperature). In other embodiments, the viscosity of the resin may be 1 Pa·s or less, preferably 0.5 Pa·s or less, more preferably 0.1 Pa·s or less, even more preferable 0.01 Pa·s or less (at room temperate). Viscosity can be measured using any well-known method in the art.

### The core layer

The core layer of the panel according to the invention is generally a low cost layer and usually provides bulk volume to the panel. The core layer comprises a particulate material and a resin as described above.

In the context of the present specification the term "particulate material" refers to a material that is different from the fibrous material used in the surface layer(s) (see, the section "The surface layer(s)"). The particulate material may, for example, contain material of a different nature than the fibrous material in the surface layer(s). Alternatively, the particulate material may contain material of the same nature as the fibrous material in the surface layer(s), but have different properties, such as a different fiber length and strength.

The particulate material may be fibrous or non-fibrous. In a preferred embodiment, at least part of the particulate material is non-fibrous. The particulate material in the core layer may be a non-fibrous particulate material.

The particulate material may, e.g., be in the form of powder, dust, pulp, broken fibers, flakes, or chips. Examples include wood chips, wood flakes, sawdust, hemp shives, (dried) grass, and pulp, e.g., pulp of (recycled) paper or other fiber pulp from sugar beets, fruits and vegetables, etc. Examples of plant-derived material that may be used as particulate material are cotton, flax, hemp, grass, reed, bamboo, coconut, miscanthus, coffee grounds, seed shells, e.g., from rice, burlap, kenaf, ramie, sisal, etc. and materials derived therefrom. In general plant material which has been comminuted to a suitable particle size, and where necessary dried to a suitable water content may be used.

The particulate material may comprise a natural material such as a material derived from plants or animals. Examples of plant-based materials include cellulose-based material such as fresh or used paper, fresh or used cardboard, wood or other plant material in any form, and combinations thereof.

Cellulose-based materials may be derived from so-called virgin pulp which is obtained directly from the wood pulping process. This pulp can come from any plant material, but is mostly obtained from wood. Wood pulp comes from softwood trees such as spruce, pine, fir, larch, and hemlock and hardwood trees such as eucalyptus, popular, aspen, and birch.

Additionally or alternatively, the cellulose-based material may comprise cellulose material derived from recycled paper, such as cellulose pulp obtained from regenerated books, papers, newspapers and periodicals, egg cartons, and other recycled paper or cardboard products. Combinations of cellulose sources may also be used.

Other attractive sources of cellulose-based material are reject paper fiber, which is paper fiber that is too short to be suitable for use in the manufacture of paper, and any (mechanically and/or chemically) recycled material from any (composite) material, e.g. recycled furniture made from cellulose-based materials. In particular, (composite) materials made with the resin mentioned here as a binder are attractive sources of the cellulose-based material. Use of these (recycled) materials is highly sustainable and low cost, allowing wide-spread use in, for example, furniture manufacturing.

The use of cellulose-based materials such as wood dust, wood pulp, and dust and pulp derived from other cellulose-based materials such as hemp has been found to give particularly attractive results.

Examples of animal-derived materials include feathers, down, hair and derivatives thereof such as wool, but also bone meal.

Further examples of suitable particulate materials include ceramic materials, including oxides, e.g. alumina, beryllia, ceria, zirconia, silica, titania, and mixtures and combinations thereof, and non-oxides such as carbide, boride, nitride, silicide, and mixtures and combinations thereof such as silicium carbide. For the purposes of the present specification glass is considered a ceramic material. Glass may, e.g., be used in the form of short fibers, glass beads, whether solid or hollow, and ground glass particles. Suitable particulate materials further include materials like micaceous fillers, calcium carbonate, and minerals such as phyllosilicates. Clay, sand, etc may also be used.

Suitable particulate materials also include polymer fillers, such as particles or short fibers of polyethylene, polypropylene, polystyrene, polyesters such as polyethylene terephthalate, polyvinylchloride, polyamide (e.g., nylon-6, nylon 6.6 etc.), polyacrylamide, and arylamide polymers such as aramid. Suitable particulate materials also include carbon fibers and carbon particulate materials. Comminuted cured polyester resin as used in the present invention may also be used as particulate material. Comminuted cured polyester resin containing a filler may also be used.

In some embodiments, the particulate material contains one or more organic particulate materials, e.g. selected from the group consisting of shives, wood dust, wood chips, and recycled paper. In other embodiments, the particulate material (also) contains one or more inorganic particulate materials, e.g. selected from the group consisting of (recycled) glass, stone, ceramic, minerals, and metals,

As will be understood by the skilled person, combinations of different types and materials may also be used in the particulate material.

The particulate material may be present in the core layer in an amount of at least 10 wt.%, calculated on the total weight of the core layer, not including water. The particulate material may be present in the core layer in an amount of at most 80 wt.%, preferably at most 85 wt.%, more preferably at most 90 wt.%, even more preferably at most 95 wt.%, calculated on the total weight of the core layer used, not including water. In some embodiments, the amount of particulate material present in the core layer is from 10 wt.% to 95 wt.%, preferably from 20 wt.% to 95 wt.%, more preferably from 30 wt.% to 95 wt.%, more preferably from 50 wt.% to 95 wt.%, more preferably from 80 wt.% to 95 wt.%.

The particulate material in the core layer may have a maximum length, determined along the longest axis of the particles in the material, of less than 50 mm, preferably less than 20 mm, more preferably at most 15 mm, more preferably at most 10 mm, in particular at most 5 mm, in particular at most 2 mm. As a minimum value, an average length of the particles of 0.001 mm may be mentioned. In some embodiments, the average length of the particles is at least 0.05 mm, in particular at least 0.1 mm, more in particular at least 0.5 mm. In some embodiments, the average length of the particles is in the range of 0.5-5 mm, in particular 0.5-2 mm.

In some embodiments, at least 50 wt.% of the particles in the particulate material have a length, determined along their longest axis, in the range of 0.5-20 mm, in particular 0.5-10 mm, in particular 1-5 mm. In some embodiments, at least 80 wt.% of the particles in the particulate material have a length, determined along their longest axis, in the range of 0.5-20 mm, in particular 0.5-10 mm, in particular 1-5 mm. In some embodiments, at least 90 wt.% of the particles in the particulate material have a length, determined along their longest axis, in the range of 0.5-20 mm, in particular 0.5-10 mm, in particular 1-5 mm.

In some embodiments the particles in the particulate material may have an aspect ratio in the range of 10:1 to 1:1, preferably in the range of 8:1 to 2:1, more preferably in the range of 6:1 to 4:1. As used herein, "aspect ratio" is defined as the length of the particle, determined along its longest axis, over the average diameter of the particle, determined along the axis that is perpendicular to the longest axis.

In some embodiments, at least 50 wt.% of the particles of the particulate material have an aspect ratio of less than 500:1, preferably less than 100:1, more preferably less than 50:1, even more preferably less than 10:1, in particular in the range of 8:1 to 1:1, in some embodiments in the range of 6:1 to 4:1

The particulate material in the core layer may have an effective average particle size of less than 25 mm, preferably less than 20 mm. As used herein, "an effective average particle size of less than 25 mm" means that at least 90% of the particles have a diameter of less than 25 mm, when determined using conventional techniques (e.g., by mechanical screening or sieving). The effective average particle size may be in the range of 0.01 to 25 mm, preferably in the range of 2 to 25 mm, more preferably in the range of 2 to 20 mm, even more preferably in the range of 5 to 25 mm. In some embodiments, the effective average particle size may be preferably 0.1 to 6.0 mm, more preferably in the range of 0.2 to 3.0 mm, even more preferably 0.3 mm to 1.0 mm.

The core layer may have a resin content in the range of 1-40 wt.%, calculated on the total weight of the fibrous material and the resin. The core layer preferably has a resin content in the range of 2-30 wt.%, more preferably in the range of 5-20 wt.%. Using such an amount of resin in the core layer renders the core layer relatively inexpensive, whilst the amount used is sufficient to bind the particulate material in the core layer together.

The density of the core layer may be at least 0.1 g/cm³ to at most 1.4 g/cm³, preferably at least 0.3 g/cm³ to at most 1.4 g/cm³, more preferably at least 0.5 g/cm³ to at most 1.4 g/cm³. It may be desirable for the core layer to have a density of at most 1.3 g/cm³, more preferably at most 1.2 g/cm³, more preferably at most 1.0 g/cm³, even more preferably at most 0.8 g/cm³. It is preferred that the core layer have a relatively low density (as compared to the surface layer(s)), as this will result in result in a relatively light core layer. This is advantageous, as the core layer makes up the bulk of the panel and so the lighter the core layer, the lighter the overall product. Lighter products, in turn, are associated with easier operability on the part of the manufacturer and consumer.

The core layer may have a thickness of at least 1.5 mm, more in particular at least 2 mm, more in particular at least 4 mm. The core layer may have a thickness of at most 20 cm, in particular at most 10 cm, more in particular at most 5 cm, even more in particular at most 3 cm. For certain applications, such as applications in construction and building (e.g., in walls), thicker layers may be advantageous, because thicker layers are associated with mechanical strength and insulative properties (e.g. reduced heat conductivity). In other applications, such as furniture applications (e.g., table tops, (kitchen) cabinets, cupboards, closets, etc.), thinner layers may be advantageous, because thinner layers are associated with a lower overall weight of the panel.

### The surface layer(s)

The sandwich panel according to the invention comprises at least one surface layer which comprises a fibrous material and a resin as described herein. The surface layer(s) are bonded to the core layer and provide structural support and other desired properties (hardness, attractive appearance, water resistance, etc.) thereto. As a result, a relatively weaker core layer can be used in the panel, which advantageous because this, in turn, allows the core layer to be made of low cost materials. It is noteworthy that, in WO 2021/023495, not the carrier layer, but the wooden panel provides structural support to the laminate. That the surface layer(s) can provide a desired structural support to weak materials is surprising, given that a relatively low (as compared to WO 2021/023495) amount of resin can be used.

To the contrary, a coating with a very high resin content, but without (long) fibers, can be brittle and so is unlikely to be suitable for use as a structural support of other materials.

To obtain a surface layer that provide structural support to the core layer, the at least one surface layer may comprise a fibrous material and 10-90 wt.%, preferably 20-80 wt.%, more preferably 30-70 wt.%, even more preferably 40-60 wt.%, of a resin as described above. It is preferred that the fibers of the fibrous material are relatively long. Long fibers are thought to better transfer forces exerted on the panel to other fibers in the panel, thereby increasing the flexural strength and hardness of the surface layer(s). Additionally, long fibers in themselves provide strength to the surface layer.

Within the context of the present specification, the word "fiber" refers to monofilaments, multifilament yarns, threads, tapes, strips, and other elongate objects having a regular or irregular cross-section and a length substantially longer than the width and thickness.

The fibrous material generally has a fiber length, determined over its longest axis, of at least 1 cm, preferably at least 3 cm, preferably at least 4 cm. For example, the fibrous material may have a fiber length, determined over its longest axis, of 1-20 cm. Preferably, the fibrous material has a fiber length of 1-10 cm. Long(er) fibers are preferred, because these provide strength to the surface layer(s). The fibers used in the surface layer may, on average, be longer than any fibers used in the core layer and, preferably, on average, stronger than any fibers used in the core layer.

The fibrous material may contain fibers having a diameter from 0.001 to 10 mm, preferably from 0.01 to 1 mm, more preferably from 10 to 500 µm. Thinner fibers are advantageous for many applications, as their use results in a smooth surface of the panel. Smooth surfaces are, of course, desirable when manufacturing, e.g., kitchen cupboards.

The fibers may have an aspect ratio in the range of 20:1 to 200,000:1, preferably in the range of 200:1 to 20,000:1, more preferably in the range of 250:1 to 5000:1. It follows the surface layer(s) may comprise fibers having a relatively large aspect ratio, which is, at least partially, indicative of the strength of the surface layer(s) that can be obtained.

The fibers in the surface layer(s) may be oriented in a random (e.g., a non-woven sheet) or a non-random manner. The fibrous material is preferably non-woven sheet.

In the context of the present specification "oriented in a non-random manner" refers to all structures wherein fibers are oriented with respect to each other in an essentially regular manner. Examples of layers containing fibers oriented in a non-random manner include woven layers, knitted layers, layers wherein the fibers are oriented in parallel, and any other layers wherein fibers are connected to each other in a repeating patters.

Fiber orientation in the fibrous material may, for example, affect the strength of the endproduct. Therefore, in some cases, it may be preferred to orientate the fibers in a manner that maximises the strength of the article. In some embodiments, at least 50% of the fibers are oriented in parallel, preferably at least 60% of the fibers are oriented in parallel, more preferably at least 70% of the fibers are oriented in parallel. In other cases, more anisotropic properties or bi-directional resistance may be required.

The fibrous material may comprise plant-derived fibers, preferably cellulosic and/or lignocellulosic fibers. The fibrous material may also consist essentially of plant-derived fibers. Examples of fibers based on plant-derived fibers include flax, hemp, kenaf, jute, ramie, sisal, coconut, bamboo, and cotton. The fibrous material may also comprise an animal-derived fiber. The sanimal-derived fiber may be wool, hair, silk, and fibers derived from feathers (e.g., chicken feathers). Other parts of offal may also be used.

The fibrous material may comprise synthethic fibers. Examples of suitable synthetic fibers are fibers derived from viscose, glass, polyesters, carbon, aramids, nylons, acrylics, polyolefins and the like. The fibrous material may also be a mixture of fibers of different origin, such as a mixture of plant-derived fibers and synthetic fibers.

It is preferred for fibrous material used in the present invention to comprise plant-derived fibers, preferably cellulosic and/or lignocellulosic fibers, it may be particularly preferred for the fibrous material to consist essentially of plant-derived fibers. As indicated above, examples of fibers based on plant-derived fibers include flax, hemp, kenaf, jute, ramie, sisal, coconut, bamboo, and cotton, wherein hemp may be particularly attractive.

The fibrous material may be present in the surface layer in an amount of at least 30 wt.%, preferably at least 35 wt.%, more preferably at least 40 wt.%, calculated on the total weight of the surface layer, not including water. The fibrous material may be present in the surface layer in an amount of at most 80 wt.%, optionally at most 60 wt.%, optionally at most 55 wt.%, calculated on the total weight of the surface layer, not including water. In some embodiments, the amount of fibrous material present in the surface layer is from 30 wt.% to 60 wt.%, preferably from 35 wt.% to 60 wt.%, more preferably from 40 wt.% to 60 wt.%.

The surface layer(s) generally has an areal weight (not including the resin of at least 400 g/m², preferably at least 500 g/m², more preferably at least 600 g/m². As an upper limit, the surface layer(s) may have an areal weight (not including the resin) of at most 30000 g/m², preferably at most 10000 g/m², more preferably at most 5000 g/m². The areal weight as defined here is desired, as it provides advantageous structural properties to the panel. A higher areal weight, for example, is associated with a better stiffness, harder surface and increased water resistance.

The density of the surface layer may be at least 0.3 g/cm³, preferably at least 0.8 g/cm³, preferably at least 1.0 g/cm³. Surface layers comprising fibrous materials with fibers having a higher intrinsic density may have a higher density than 1.4 g/cm³. It may be desirable for the surface layer to have a density of at most 1.4 g/cm³, more preferably at most 1.3 g/cm³. It is preferred that the density of the surface layer(s) is in the range of 0.8 to 1.4 g/cm³, preferably in the range of 1.0 to 1.4 g/cm³.

The surface layer(s) may have each a thickness of at least 0.3 mm, preferably at least 0.5, more preferably greater than 1 mm, even more preferably at least 1.1 mm. The surface layer(s) may each have a thickness of at most 20 mm, more preferably at most 10 mm, even more in particular at most 5 mm, still more in particular less than 5 mm. A surface layer having such a thickness provides desired structural support to the core layer of the panel without contributing unnecessary weight or material.

After curing of the panel, the surface layer(s) has a porosity, expressed as a pore fraction between 0 and 1, of from 0 to 0.8, preferably from 0.01 to 0.7, more preferably from 0.1 to 0.4. The porosity is a measure of the voids ("empty" spaces) in a material and is a fraction of the volume of the voids over the total volume of the surface layer(s). Accordingly, a material containing no pores as a porosity, expressed as a pore fraction, of 0. A low porosity allows for, for example, easy cleaning of the surface when the panel is used as a surface in a household.

The fibers in the surface may be dyed, such that the fibers have a colour that is different from their natural colour. Additionally or alternatively, the resin itself may be coloured by a dye. It may be preferable to add dye(s) to only one surface layer (e.g., on the outer surface of a cupboard) such that the amount of dye/pigment is limited.

### The panel

The core layer and the surface layer are combined to form a layered structure, which is then (partly) cured under pressure to give the panel according to the invention.

The panel may have a resin content of at least 10 wt.%, preferably at least 15 wt.%, based on the total weight of the panel. The panel may have a resin content of at most 80 wt.%, preferably at most 70 wt.%, more preferably at most 60 wt.%, based on the total weight of the panel. The panel may comprise from 10 to 60 wt.% resin, preferably from 15 to 50 wt.% resin, more preferably from 15 to 40 wt.% resin.

The amounts of resin present in the surface layer(s) and the core layer may be different, as has been described in the sections "The core layer" and "The surface layer(s)" above. The ratio of the resin content (in wt.%) of the core layer to the total resin content (in wt.%) of the surface layer(s) is in the range of 1:1.5 to 1:15, in particular in the range of 1:1.5 to 1:10, more in particular 1:2 to 1:8, even more in particular 1:2.1 to 1:8, still more in particular 1:3 to 1:7. In other words, the resin content (in wt.%) of the core layer is lower than the total resin content (in wt.%) of the surface layer(s). A lower resin content is associated with a lower overall cost of core layer (as the particulate material generally has a lower cost/kilogram than the resin), making lower resin contents preferable for the core of the panel. A higher resin content is associated with good strength and water resistance, making higher resin contents preferable for the surface(s) of the panel.

The thickness of the panel may be at least 3 mm, preferably at least 8 mm, preferably at least 1.5 cm. As an upper limit, 24 cm may be mentioned.

The thickness of the core layer may differ from the total thickness of the surface layer(s). The core layer may, for example, have a greater thickness than the total thickness of the surface layer(s). The ratio of the thickness of the core layer to the total thickness of the surface layer(s) may be 1:1 or more. The ratio of the thickness of the core layer to the total thickness of the surface layer(s) is preferably in the range of 1:1 to 150:1, more preferably in the range of 1:1 to 50:1, more preferably 1:1 to 25:1, more preferably 2:1 to 25:1, more preferably 3:1 to 25:1, more preferably 5:1 to 20:1.

The panel can be made entirely of sustainable materials. Because, depending on the extent of polymerization, the polymers in the panel can be hydrolysed, the polymers in the panels will in some embodiments slowly degrade, leaving the fibrous material, the particulate material and the polymer available for biological degradation. Accordingly, in some embodiments, the panel is biologically degradable. Moreover, as the polymer consists essentially of carbon, hydrogen, and oxygen atoms, it shows a clean burning profile, as well as a good suitability for disposal as organic waste.

The panel according to the invention generally has a high hardness value. The panel may have a hardness of at least 50 Shore D, preferably at least 55 Shore D, more preferably at least 60 Shore D. A high hardness may be preferable, as the hardness is indicative of, amongst other things, scratch resistance. As an upper limit, a hardness of at most 100 Shore D may be mentioned. The hardness of the panel may be determined according to ASTM D 2240 using a Shore durometer.

The panel according to the invention generally has a high flexural strength. The panel may have a flexural strength of greater than 15 MPa, for example as determined using ASTM D 7264. The panel preferably has a flexural strength of at least 20 MPa, more preferably of at least 25 MPa. Evidently, a high flexural strength is preferably in situations where the panel is used as a surface on which heavy loads may be placed, such as a table. As an upper limit, a flexural strength of at most 200 MPa may be mentioned.

When highly durable and strong panels are aimed for, the polymer may have an extent of polymerization of at least 0.8, preferably at least 0.9, more preferably at least 0.95, as described in the section "The resin". These extents of polymerization are usually obtained after curing as described in the section "Curing the layered structure to obtain a panel according to the invention".

The water content of the panel according to the invention is generally low. The water content of the panel may be less than 20 wt.%, calculated on the total weight of the panel. The water content is preferably 15 wt.% or less, more preferably 10 wt.% or less. In some embodiments, the water content of the panel is as defined above after 24 hours of storage at 50% (relative) humidity and a temperature of 20 ºC, more preferably after 48 hours, most preferably after 72 hours.

The panel according to the invention generally has a good water resistance. The surface(s) of the panel, in particular, are water resistant. Water resistance may be determined according to EN 317, which measures the increase in thickness of the panel (in percentages, as compared to the original thickness of the panel). The resulting increase in thickness, referred to as "thickness swelling" hereinafter, may be at most 50%, preferably at most 40%, more preferably at most 30%. Ideally, the thickness swelling would be 0%, which would be indicative of superb water resistance. Therefore, the thickness swelling is preferably 0%. The thickness swelling of the panel according to the invention may be in the range of 1 to 50%, in particular in the range of 5 to 45%, more in particular in the range of 10 to 40%.

The surface layer(s) of the panel may be coated with a coating. For example, the coating may a coating that is impermeable to water, fire-resistant, and/or inert to acid and/or base. Possible coatings are, for example, those described in WO 2021/023495 (coatings are therein referred to as "carrier layer").

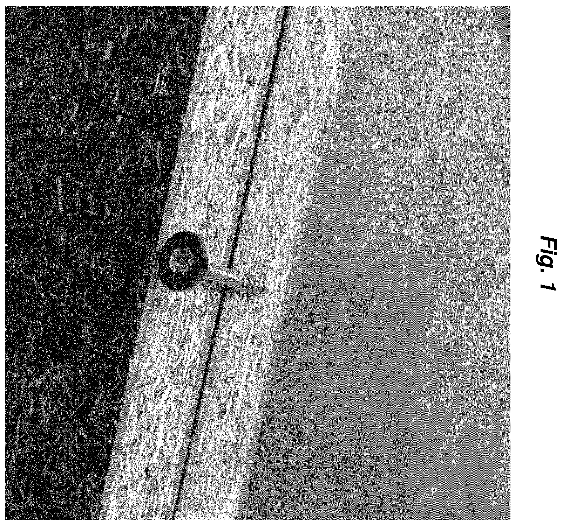

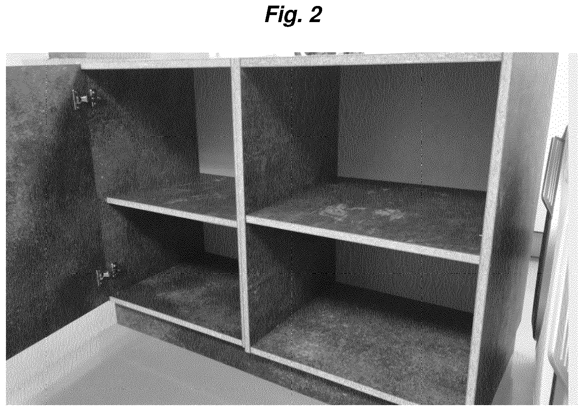

The panel according to the invention can readily be used in construction. It is easy to machine (e.g. saw, drilling, CNC), incorporate screws and attach hinges, so that the panels can be attached to each other to form cupboards and the like. As the surface layer can act as a laminate (hard, smooth and dense), separate lamination with e.g. melamine laminate is not needed. Examples of constructions are shown in Figs. 1 and 2.

### Method of manufacturing the panel

As mentioned above, the invention relates to a method for manufacturing a panel according to the invention comprising the steps of
- providing a core layer base by combining particulate material and polymer derived from an aliphatic polyol with 2-15 carbon atoms and an aliphatic polycarboxylic acid with 3-15 carbon atoms, or precursors thereof;
- optionally, curing the core layer base under pressure to form a core layer comprising polymer with an extent of polymerization of at least 0.6;
- providing a surface layer base by combining fibrous material and polymer derived from an aliphatic polyol with 2-15 carbon atoms and an aliphatic polycarboxylic acid with 3-15 carbon atoms, or precursors thereof;
- combining the core layer base or core layer and at least one surface layer base to form a layered structure; and
- subjecting the layered structure to a curing step, wherein the curing step comprises curing the layered structure at an internal temperature of 100 to 220 °C for 5 seconds to 12 hours, under pressure to obtain a panel comprising polymer having an extent of polymerization, determined gravimetrically, of at least 0.6.

The specific conditions for carrying out the method according to the invention are discussed below. It will be evident to the skilled person that different embodiments of the present invention can be combined, unless they are mutually exclusive. Moreover, it will be clear that the particulate material, the fibrous material and the resin (polymer or precursors thereof) can be as described above.

### Providing the core layer base (and making the core layer)

The core layer base is a combination of particulate material and a polymer as described herein, or precursors thereof.

The polymer in the core layer may be obtained by polymerizing a combination of the polyalcohol and the polycarboxylic acid (and, optionally, a polymer derived from polyalcohol and polycarboxylic acid). Depending on the nature of the compounds the temperature may be, e.g., a temperature in the range of 20 ºC to 140 ºC, preferably 40 ºC to 140 ºC, more preferably 60 ºC to 140 ºC, even more preferably 80 ºC to 120 ºC, still more preferably 80 ºC to 105 ºC. In some embodiments, the combination may be heated and mixedfor a period of 5 minutes to 12 hours, preferably 10 minutes to 6 hours, more preferably 1 to 4 hours, before incorporation into the core layer. Curing can also take place after combining the resin with the particulate material of the core layer.

The polymer present in the core layer base may have an extent of polymerization of at most 0.8, optionally at most 0.7, optionally at most 0.6. As a lower limit, an extent of polymerization of greater than 0 may be mentioned, as this is the extent of polymerization when the precursors of the polymer are used. The extent of polymerization of the polymer in the core layer may be greater than 0, preferably at least 0.1, preferably at least 0.2, more preferably at least 0.3, preferably at least 0.4, may be mentioned. A pre-curing step may be warranted if the extent of polymerization is low.

The core layer base may be pre-cured under pressure to form a core layer, which preferably has an extent of polymerization of 0.7 to 0.8. If the core layer has a higher extent of polymerization than 0.8, there will be little to no adhesion to the surface layer(s) when the surface layer(s) and the core layer are combined to form the layered structure. The polymer in the core layer may be polymerised further in one or more curing steps under pressure. The details of this curing step (as well as any drying and pre-curing steps that can be carried out prior to curing under pressure) are the same as the curing step of the panel, which is discussed in the section "Curing the layered structure to obtain a panel according to the invention".

### Providing the surface layer base

The surface layer is a combination of fibrous material and a polymer as described herein, or precursors thereof.

The polymer may be provided in the form of a resin comprising the polymer. The resin has been described in the section "The resin". The resin can be at least partly applied to the fibrous material of the surface layer base. Preferably at least 80% of the fibers of the fibrous material are provided with resin, more preferably at least 90%, most preferably at least 95%. It is preferred that in the surface layer base essentially all fiber surface is provided with resin, because the interaction of fibers with resin is at least partially responsible for obtaining the attractive properties of the panel at issue. It will be evident to the skilled person that in the final panel substantially all fibers in the surface layer will be coated with resin.

The skilled person would understand that the provision with resin can be done using methods well-known in the art, such as spaying, dipping, roll-coating, etc. For example, resin may be (roll-)coated or sprayed onto one or more sides of the fibrous material.

The polymer in the surface layer(s) may be obtained by polymerizing a combination of the polyalcohol and the polycarboxylic acid (and, optionally, a polymer derived from polyalcohol and polycarboxylic acid). Depending on the nature of the compounds the temperature may be, e.g., a temperature in the range of 20 ºC to 140 ºC, preferably 40 ºC to 140 ºC, more preferably 60 ºC to 140 ºC, even more preferably 60 ºC to 120 ºC, still more preferably 60 ºC to 105 ºC. In some embodiments, the combination may be heated and mixed for a period of 5 minutes to 12 hours, preferably 10 minutes to 6 hours, more preferably 1 to 4 hours, before incorporation into the surface layer. Curing can also take place after combining the resin with the particulate material of the core layer.

The polymer in the surface layer base may have an extent of polymerization of at most at most 0.8, optionally at most 0.7, optionally at most 0.6. As a lower limit, an extent of polymerization of greater than 0 may be mentioned, as this is the extent of polymerization when the precursors of the polymer are used. The extent of polymerization of the polymer present in the surface layer base may be at least 0.1, preferably at least 0.2, more preferably 0.3, more preferably at most 0.4. A pre-curing step may be warranted if the extent of polymerization is low.

### Forming the layered structure

The core layer base and the surface layer base are combined to form a layered structure. This can be done in a single step or in two steps. In the layered structure, the core layer or core layer base may be arranged between one or two surface layer bases.

In a single step process, the layered structure comprises a core layer and at least one surface layer base, each base independently comprising a polymer having extent of polymerization of at most 0.8. As a lower limit, an extent of polymerization of at least 0 may be mentioned, as this is the extent of polymerization when the precursors of the polymer are used. The extent of polymerization of the polymer present in each base may independently be at least 0.1, preferably at least 0.2, more preferably 0.3, more preferably at least 0.4. These bases are then stacked to form a layered structure.

A single-step method of manufacturing a panel according to the invention may, thus, comprise the steps of
- providing a combination of particulate material and polymer derived from an aliphatic polyol with 2-15 carbon atoms and an aliphatic polycarboxylic acid with 3-15 carbon atoms, or precursors thereof, to form a core layer base;
- providing a combination of fibrous material and polymer derived from an aliphatic polyol with 2-15 carbon atoms and an aliphatic polycarboxylic acid with 3-15 carbon atoms, or precursors thereof, to form a surface layer base;
- combining the core layer base and the surface layer base to form a layered structure comprising the core layer base and the surface layer base; and
- subjecting the layered structure to a curing step under pressure, wherein the curing step comprises curing the layered structure at an internal temperature of 100 to 220 °C for 5 seconds to 12 hours, to obtain a panel comprising polymer having an extent of polymerization, determined gravimetrically, of at least 0.6, preferably of at least 0.7, preferably of at least 0.8, preferably of at least 0.9.

In a two-step process, the core layer base is first cured under pressure. This can be done to bond the particulate material together by polymer. The polymer in the core layer obtained after curing under pressure may have an extent of polymerization of 0.6 to 1, preferably of 0.7 to 1, more preferably 0.7 to 0.8, after curing under pressure. The so-obtained core layer of the panel can then be provided with a surface layer base, with an extent of polymerization as described above, on one or more (e.g. both) sides.

A two-step method of manufacturing a panel according to the invention may, thus, comprise the steps of
- providing a combination of particulate material and polymer derived from an aliphatic polyol with 2-15 carbon atoms and an aliphatic polycarboxylic acid with 3-15 carbon atoms, or precursors thereof, to form a core layer base and subjecting the core layer base to a curing step under pressure to form a core layer comprising a polymer with an extent of polymerization of 0.6 to 1, preferably of at least 0.7 to 1, more preferably of at least 0.7 to 0.8;
- providing a combination of fibrous material and polymer derived from an aliphatic polyol with 2-15 carbon atoms and an aliphatic polycarboxylic acid with 3-15 carbon atoms, or precursors thereof, to form a surface layer base;
- combining the core layer and at least one surface layer base, preferably such that the core layer is arranged between two surface layer bases, to form a layered structure; and
- subjecting the layered structure to a curing step under pressure, wherein the curing step comprises curing the layered structure at an internal temperature of 100 to 220 °C for 5 seconds to 12 hours, to obtain a panel comprising polymer having an extent of polymerization, determined gravimetrically, of at least 0.6, preferably of at least 0.7, more preferably of at least 0.8, even preferably of at least 0.9.

The layered structure may have a resin content of at least 10 wt.%, preferably at least 15 wt.% calculated on the total weight of the particulate material, the fibrous material and the weight of the polymer. The layered structure may have a resin content of at most 80 wt.%, preferably at most 70 wt.%, more preferably at most 60 wt.%, calculated on the total weight of the particulate material, the fibrous material and the weight of the polymer. The layered structure may comprise from 10 to 60 wt.% resin, preferably from 15 to 50 wt.% resin, more preferably from 15 to 40 wt.% resin, calculated on the total weight of the particulate material, the fibrous material and the weight of the polymer.

### Curing the layered structure to obtain a panel according to the invention

The core layer base, the surface layer base, and/or the layered structure may independently have a water content between 0.1 wt.% and 60 wt.%, calculated on the total weight of the base or layered structure. In some embodiments, the water content of the core layer base, the surface layer base, and/or the layered structure is, independently, between 0.1 wt.% and 25 wt.%, preferably between 0.1 wt.% and 20 wt.%, more preferably between 0.1 wt.% and 10 wt.%. A low water content may be advantageous, because it reduces the time required for curing the layered structure and, in some cases, reduces waste of the resin through leakage from the layered structure. The water content is defined as follows: the amount of water in the layered structure divided by the total mass of the layered structure.

If the core layer base, the surface layer base, and/or the layered structure have a water content that is too high, they can be subjected to a drying step, to remove excess water. The drying step can be carried out under conditions suitable for removing water. During the drying, little to no polymerization of the resin will occur. This is because, when a drying step is warranted, the water content is high and because the drying temperature is below a temperature at which significant polymerisation occurs. Drying may be done at a temperature below 60 ºC, preferably at a temperature of 10 to below 60 ºC, more preferably at a temperature of 10 to 50 ºC, even more preferably at a temperature of 20 to 50 ºC, most preferably at a temperature of 30 to 50 ºC. The drying time is preferably at most 48 hours, preferably at most 24 hours. In some embodiments, the drying time is much shorter, preferably at most 8 hours, more preferably at most 4 hours, even more preferably at most 2 hours, most preferably at most 1 hour. As a minimum, a drying time of 5 minutes could be mentioned. A reduced pressure may be applied to accelerate drying. The reduced pressure may be 0.9 bars or less, preferably 0.5 bars or less, more preferably 0.1 bars or less. The drying may reduce the water content to below 20 wt.%, preferably to below 10 wt.%, more preferably to below 5 wt.%, most preferably below 2 wt.%, calculated on the total weight of the base or layered structure.

Additionally or alternatively, depending on the extent of polymerisation, the (dried) core layer base and/or the (dried) surface layer base can, independently, be subjected to a pre-curing step. During the pre-curing, polymerisation of the resin will occur and removal of (reaction) water may occur. Pre-curing may be performed at a temperature of at least 60 ºC. For example, pre-curing may be performed at a temperature of 60 to 140 ºC, preferably 60 to 120 ºC, more preferably 80 to 120 ºC. If a drying step is applied, the pre-curing may result in an extent of polymerisation of at most 0.8, preferably from 0.4 to 0.8, more preferably 0.6 to 0.8, even more preferably 0.7 to 0.8. If no drying has been applied, the pre-curing may reduce the water content to below 35 wt.%, preferably below 20 wt.%, more preferably below 10 wt.%, even more preferably below 5 wt.%, most preferably below 2 wt.%, calculated on the total weight of the layered structure. The pre-curing may be done for at least 5 minutes, preferably at least 10 minutes, more preferably at least 1 hour. As a maximum, a pre-curing time of 24 hours may be mentioned. Generally, the pre-curing will be done in an oven. It is advantageous to carefully control the humidity in the oven, because water is removed during drying and so a high humidity would be counterproductive. Accordingly, when pre-curing, the humidity in the oven may be less than 50%, preferably less than 40%. The lower the humidity, the faster the drying process will be.

The layered structure, whether or not having been subjected to a drying step and/or a pre-curing step is then subjected to a curing step under pressure to obtain a panel according to the invention with an extent of polymerization as described above. The curing step is intended to ensure that the layers adhere to each other, and that the desired surface properties are obtained. Depending on the context, as used herein, "under pressure" may include atmospheric pressure, a pressure greater than atmospheric pressure, or vacuum pressure.

Specifically, the layered structure may be subjected to one or more curing steps (e.g. curing at different temperatures). Preferably, the layered structure is subjected to two or more curing steps. The curing step is intended to further polymerize the polymer and so increase the strength and water resistance. The crux of a curing step is, thus, that the polymer is at reaction temperature. The curing step may also be performed to remove or reduce the amount of water left in the layered structure.

Curing can be carried out using heating technology known in the art, e.g., in an oven. Different types of ovens may be used, including but not limited to belt ovens, convection ovens, infra-red ovens, hot-air ovens, conventional baking ovens and combinations thereof. Curing can be done in a single step, or in multiple steps. Curing times generally range from 5 seconds up to 12 hours, depending on the size and shape of the layered structure and on the type of oven and temperature used. It is within the scope of a person skilled in the art to select suitable curing conditions.

The layered structure is cured at an internal temperature of 100 to 220 ºC, preferably 100 to 180 ºC, more preferably 120 to 170 ºC. Preferably, the internal temperature during curing is 170 ºC or less when the layered structure comprises natural fibers or particulate material (e.g., cellulosic or lignocellulosic fibers), because higher temperatures could damage these fibers. When a high water resistance is aimed for, curing preferably takes place at an internal temperature of above 150 ºC. Accordingly, the curing temperature may then be above 150 to 220 ºC, preferably above 150 to 180 ºC, more preferably above 150 to 170 ºC. The internal temperature is measured during curing or immediately after the panel is removed from a means for curing, such as an oven or a press.

The layered structure obtained using the process according to the invention may be cured in two steps. This can be advantageous if the water content in the layered structure is still relatively high, because a two-step process prevents uneven curing of the layered structure. In a first curing step, at an internal temperature of from 80 to 140 ºC, preferably from 105 to 135 ºC, more preferably from 110 to 130 ºC. Curing the layered structure at this temperature minimizes the development of blisters on the surface of the panel, which would develop if the layered structure was cured at higher temperatures. The first curing step is preferably carried out for at least 15 mins, preferably for at least 25 mins, preferably for at least 30 mins. It may be carried out for as long as desired, but, for commercial reasons, it is generally not carried out for longer than 3 hours.

After the first curing step, the layered structure may be cured, in a second curing step, at an internal temperature of 140 to 220 ºC, preferably 140 to 180 ºC. Preferably, the internal temperature during curing is 170 ºC or less when the layered structure comprises natural fibers (e.g., cellulosic or lignocellulosic fibers), because higher temperatures could damage these fibers. The second curing step, if still necessary, can be used to increase the strength of the layered structure. It is generally carried out for at least 60 minutes, preferably for at least 90 minutes. For commercial reasons, the second curing step is generally carried out for at most 6 hours. As will be clear to the skilled person, a temperature gradient may also be applied during curing.

Pressure more than or less than atmospheric pressure may be applied to the layered structure, for example to give the final panel a particular shape or density. Such a pressure may be applied prior to or during curing. This pressure may be applied by pressing the structure in or on a mould, preferably a mould coated with a Teflon material. As used herein, a "mould" is defined as a shape capable of supporting the layered structure during the curing step. The pressure may be from 2 to 40 bars (= kg/cm² structure), preferably from 5 to 30 bars, more preferably from 15 to 30 bars. The pressure may be applied for a total duration of at least 5 seconds. The pressing may done using a thickness control that determines the thickness of the panels obtained by the process, which has been described above. Pressure may be applied to obtain a surprisingly strong panel having high surface homogeneity and scratch-resistance.

After curing, the extent of polymerization of the polymer in the panel will generally be at least 0.6, preferably at least 0.7, more preferably at least 0.8, even more preferably at least 0.9. Moreover, immediately after curing, the water content of the panel is generally below 10 wt.% (calculated on the total weight of the layered structure), preferably below 5 wt.%, more preferably below 2 wt.%, most preferably below 1 wt.%. Depending on the storage conditions, the water content of the panel may increase after curing.

Other properties of a panel obtainable by the method according to the method, such as its water resistance, flexural strength, and hardness, have been described above.

### EXAMPLES

The following examples will illustrate the practice of the invention in some preferred embodiments. Other embodiments within the scope of the invention will be apparent to the skilled person.

### Example 1: Preparation of solution of polyester polymer

Glycerol (1.0 kg, 10.9 mol, >99% purity) and citric acid (2.0 kg, 10.4 mol, >99% purity) were combined in a reactor vessel that was stirred and heated. Boric acid (9 g, 0.5 m/m, >99% purity) was added. Within approximately 15 minutes, the mixture was heated to 135 ºC and kept at that temperature for 15 minutes. The mixture was then diluted using tap water, after which the water content was 40-50 wt.%. The mixture was allowed to cool down.

To determine the extent of polymerization of the polymer formed before the dilution with tap water, the weight of the reaction product (2775 g) was measured using a balance and compared with the total weight of the starting materials (3000 g). The extent of polymerization was then calculated using the weight difference between the total weight of the starting materials and the weight of the reaction product.

The polymerization reaction of glycerol and citric acid is an esterification reaction. In an esterification reaction, two functional groups (namely, a hydroxyl group and a carboxylic acid group) react to form one water molecule. The esterification reaction is driven towards completion by the evaporation of water. The lower weight of the reaction product is, thus, a result of the evaporation of this reaction water. From the weight difference between the total weight of the starting materials and the weight of the reaction product, it can be determined that approximately 225 g (about 12.5 mol) of water had evaporated when the above-described reaction was stopped after 15 minutes. One equivalent of water is lost when one equivalent of carboxylic acid groups reacts with one equivalent of hydroxyl groups. This means that 12.5 equivalents of carboxylic acid groups and 12.5 equivalents of hydroxyl groups had reacted when the reaction was stopped after 15 minutes.

The maximum number of functional groups that could react is, in the above-mentioned esterification reaction, determined by the equivalents of carboxylic acid groups available for reaction (as there were less carboxylic acid groups available for reaction than hydroxyl groups). Citric acid has three carboxylic acid groups. Accordingly, there were 31.2 equivalents of carboxylic acid groups (3×10.4 mol of citric acid) available for reaction.

The extent of polymerization is the ratio of the fraction of functional groups that have reacted at a certain point in time (here: 12.5 equivalents of carboxylic acid groups after 15 minutes) to the maximum number of functional groups that can react (here: 31.4 equivalents of carboxylic acids groups). This means that, after the reaction was stopped, the extent of polymerization of the polymer was 0.40 (12.5/31.2).

### Example 2: Manufacture of a panel in a single-step process

### Preparation of the surface layer bases

Two hemp mats (110x85 cm) were cut from a hemp roll (15x1 m, thickness of 10 mm, 1100 g/m², from Hempflax). The hemp mats were impregnated with the resin obtained in Example 1. The resin was first poured evenly onto one side of the hemp mats. The hemp mats were then rolled with the help of a rolling pin and then passed through a wringer. The impregnation of the resin was done at room temperature. After these steps, the total amount of resin impregnated into the mats was between 45-55 wt.%, calculated on the weight of resin before dilution and the total weight of the mats and the resin before dilution. The impregnated hemp mats were pre-cured at 80 ºC for 2,5 hours. Then, they were allowed to cool down to room temperature.

### Preparation of the core layer base

A particulate material was prepared from 9000 g of hemp shives. To this particulate material, 1500 g of the resin of Example 1 was added and the resulting particulate mixture was stirred. The particulate mixture had a resin content of 10 wt.% calculated on the weight of resin before dilution and the total weight of the particulate material and the resin before dilution. This particulate mixture was then dried at 120 ºC for 1 hour.

### Forming the layered structure

A first hemp mat (pre-heated at 80 ºC) was placed in a mould. The particulate mixture (preheated at 120 ºC) was spread out over the first hemp mat. A second hemp mat was applied over the particulate mixture. The mould was provided with a cover, and pressure was applied onto the mould (est. 1-5 bar).

### Curing the layered structure to obtain a panel

The mould was removed and the structure was then pressed for a total of 10-20 mins at a temperature of 155 ºC (internal temperature of 115-125 ºC). The panel was removed from the press. The so-obtained sandwich panel had a smooth and homogenous surface, as determined by touch and visual inspection.

The panel was then subjected to a post-curing step as follows: The panel was placed in an oven, pre-heated at 120 ºC and cured at that temperature for 30 minutes, followed by curing at 160 ºC for 105 mins.

The final panel had a smooth and homogenous surface, with good hardness and good water resistance, as shown in Table 1.

**Table 1:**

| **Panel property** | **Result obtained** |
|---|---|
| **Hardness** | 60-80 Shore D |
| **Flexural Strength** | 30-40 MPa |
| **Thickness Swelling after 2h** | 10-30 % |

### Example 3: Manufacture of a panel in a two-step process

In this example, in a first step a core panel is manufactured, which is then combined with the surface layers.

### Preparation of the surface layer bases

The surface layer bases were prepared as described in Example 2.

### Preparation of the core layer

A particulate material was prepared from 9000 g of hemp shives. To this particulate material, 1500 g of the resin of Example 1 was added and the resulting particulate mixture was stirred. The particulate mixture had a resin content of 10 wt.% calculated on the weight of resin before dilution and the total weight of the particulate material and the resin before dilution.

The particulate mixture was spread out in a mould. The mould was provided with a cover, and pressure was applied onto the mould (est. 1-5 bar). The mould was removed and the particulate mixture was then pressed for a total of 12 mins at a temperature of 200 ºC (internal temperature of 115-125 ºC) with 25 bars pressure. The resulting core layer was removed from the press. The core layer had a flexural strength of 10-15 MPa.

### Forming the layered structure

The core layer thus obtained was sandwiched between two surface layer bases (i.e., impregnated hemp mats as described in Example 2), and the resulting layered structure was preheated to 80 ºC for 1 hour.

### Curing the layered structure to obtain a panel

The layered structure was then pressed for a total of 12 mins at a temperature of 155 ºC (internal temperature of 115-125 ºC) with 25 bars pressure. The so-obtained sandwich panel had a smooth and homogenous surface, as determined by touch and visual inspection.

The panel was then subjected to a post-curing step as follows: The panel was placed in an oven, pre-heated at 120 ºC and cured at that temperature for 30 minutes, followed by curing at 160 ºC for 105 mins.

The final panel had a smooth and homogenous surface, with good hardness and good water resistance, as shown in Table 2.

**Table 2:**

| **Panel property** | **Result obtained** |
|---|---|
| **Hardness** | 60-80 Shore D |
| **Flexural Strength** | 30-40 MPa |
| **Thickness Swelling after 2h** | 10-30 % |

### Example 4: Manufacture of a two steps panel with road grass

In this example, in a first step a core panel is manufactured, which is then combined with the surface layers.

### Preparation of the surface layer bases

The surface layer bases were prepared as described in Example 2.

### Preparation of the core layer

A particulate material was prepared from 8000 g of hemp shives and 1000 g of dried grass. To this particulate material, 1500 g of the resin of Example 1 was added and the resulting mixture was stirred. The particulate mixture had a resin content of 10 wt.% calculated on the weight of resin before dilution and the total weight of the particulate material and the resin before dilution.

The particulate mixture was spread out in a mould. The mould was provided with a cover, and pressure was applied onto the mould (est. 1-5 bar). The mould was removed and the particulate mixture was then pressed for a total of 12 mins at a temperature of 200 ºC (internal temperature of 115-125 ºC) with 25 bars pressure. The resulting core layer was removed from the press. The core layer had a flexural strength of 10-15 MPa.

### Forming the layered structure

The core layer thus obtained was sandwiched between two surface layer bases (i.e., impregnated hemp mats as described in Example 2) and the resulting layered structure was preheated to 80 ºC for 1 hour. 50 g of grass were then sprinkled on top of the hemp layers.

### Curing the layered structure to obtain a panel

The layered structure was then pressed for a total of 12 mins at a temperature of 155 ºC (internal temperature of 115-125 ºC) with 25 bars pressure. The so-obtained panel had a smooth and homogenous surface, as determined by touch and visual inspection. The panel is showing a different aspect determined by the road grass pattern added on top.

The panel was then subjected to a post-curing step as follows: The panel was placed in an oven, pre-heated at 120 ºC and cured at that temperature for 30 minutes, followed by curing at 160 ºC for 105 mins.

The final panel had a smooth and homogenous surface, with good hardness and good water resistance, as shown in Table 3.

**Table 3:**

| **Panel property** | **Result obtained** |
|---|---|
| **Hardness** | 60-70 Shore D |
| **Flexural Strength** | 25-35 MPa |
| **Thickness Swelling after 2h** | 15-40 % |

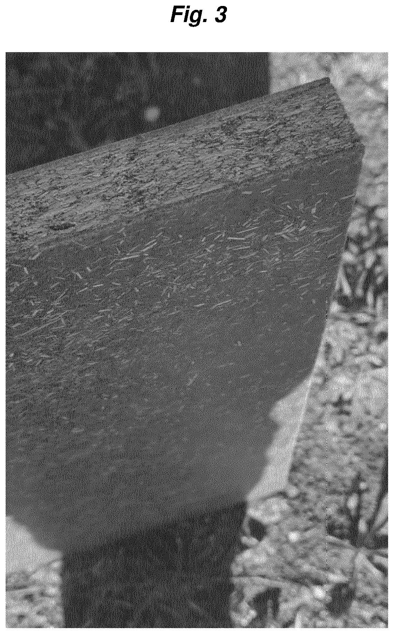

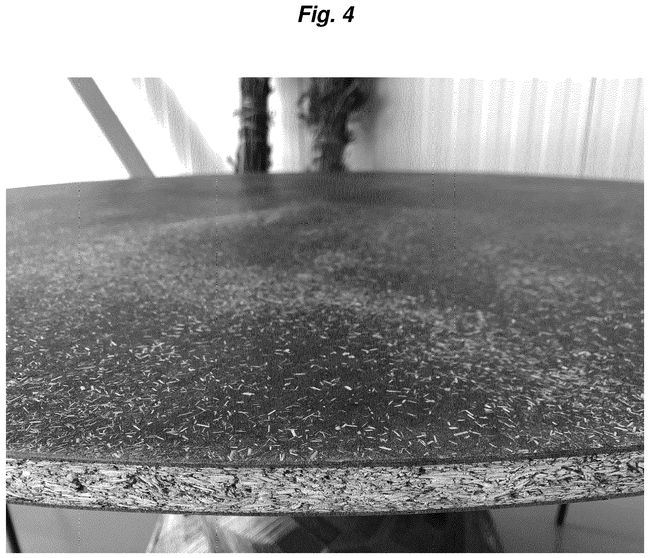

Photos of panels obtainable using this method are provided as Figs. 3 and 4. The various layers of the panels can readily be identified in Figs. 3 and 4: the surface layers are thin (1.5 mm each), whereas the core layer is thick (15 mm). Yet, the various desirable properties of the panel, as set out above, can be attributed for a large part to the thin surface layers.

### Example 5: Manufacture of a panel with covered edges in a single-step process

### Preparation of the surface layer bases

Two hemp mats (15x15 cm) were cut from a hemp roll (15x1 m, thickness of 10 mm, from Hempflax). The hemp mats were impregnated with the resin obtained in Example 1. The resin was first poured evenly onto one side of the hemp mats. The hemp mats were then flipped and the other side of the hemp mats was sprayed with resin. The impregnation of the resin was done at room temperature. The total amount of resin sprayed onto the mats was 40 wt.%, calculated on the weight of resin before dilution and the total weight of the mats and the resin before dilution. The impregnated hemp mats were pre-cured at 105 ºC for 30 mins. Then, they were allowed to cool down to room temperature.

### Preparation of the core layer base

A particulate material was prepared from 240 g of hemp shives. To this particulate material, 20 g of the resin of Example 1 was added and the resulting particulate mixture was stirred. This particulate mixture had a resin content of 10 wt.% calculated on the weight of resin before dilution and the total weight of the particulate material and the resin before dilution.

### Forming the layered structure

A first hemp mat was placed in a pre-heated mould (145 ºC). The particulate mixture was spread out over the first hemp mat. A second hemp mat was applied over the particulate mixture. The mould was provided with a cover, and pressure was applied onto the mould (est. 20-30 bar).

### Curing the layered structure to obtain a panel

The layered structure was then pressed for a total of 15 mins at a temperature of 145 ºC (internal temperature of 115-125 ºC). The panel was removed from the mould. The so-obtained panel had a smooth and homogenous surface, as determined by touch and visual inspection.

The panel was then subjected to a post-curing step as follows: The panel was placed in an oven, pre-heated at 120 ºC and cured at that temperature for 30 minutes, followed by curing at 160 ºC for 105 mins.

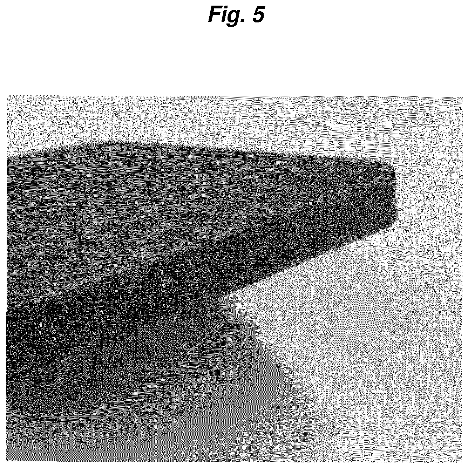

A photo of the panel provided as Fig. 5. It can be derived from Fig. 5 that the edges of the panel are covered with a surface layer, thereby preventing the core layer from being exposed.

### Example 6: Manufacture of a panel with recycled furniture as filler

In this example, in a first step a core panel is manufactured, which is then combined with the surface layers.

### Preparation of the surface layer bases

The surface layer bases were prepared as described in Example 2.

### Preparation of the core layer

A particulate material was prepared from 9000 g of recycled furniture (obtained from Vepa) made of the resin as described herein and hemp fibers. To this particulate material, 1500 g of the resin of Example 1 was added and the resulting particulate mixture was stirred. The particulate mixture had a resin content of 10 wt.% calculated on the weight of resin before dilution and the total weight of the particulate material and the resin before dilution.

The particulate mixture was spread out in a mould. The mould was provided with a cover, and pressure was applied onto the mould (est. 1-5 bar). The mould was removed and the mixture was then pressed for a total of 12 mins at a temperature of 200 ºC (internal temperature of 115-125 ºC) with 25 bars pressure. The resulting core layer was removed from the press. The core layer had a flexural strength of 10-20 MPa.

### Forming the layered structure

The core layer thus obtained was sandwiched between two impregnated hemp mats as described in Example 2.

### Curing the layered structure to obtain a panel

The resulting layered structure was preheated to 80 ºC for 1 hour. The layered structure was then pressed for a total of 12 mins at a temperature of 155 ºC (internal temperature of 115-125 ºC) with 25 bars pressure. The so-obtained sandwich panel had a smooth and homogenous surface, as determined by touch and visual inspection.

The panel was then subjected to a post-curing step as follows: The panel was placed in an oven, pre-heated at 120 ºC and cured at that temperature for 30 minutes, followed by curing at 160 ºC for 105 mins.

The final panel had a smooth and homogenous surface, with good hardness and good water resistance.

### Example 7: Manufacture of a panel with wood chips as filler

In this example, in a first step a core panel is manufactured, which is then combined with the surface layers.

### Preparation of the surface layer bases

The surface layer bases were prepared as described in Example 2.

### Preparation of the core layer

A particulate material was prepared of 9000 g of wood chips. Wood chips were furnished by Koskisen and made from birch and spruce. To this particulate material, 1500 g of the resin of Example 1 was added and the resulting particulate mixture was stirred. The particulate mixture had a resin content of 10 wt.% calculated on the weight of resin before dilution and the total weight of the particulate material and the resin before dilution.

The particulate mixture was spread out in a mould. The mould was provided with a cover, and pressure was applied onto the mould (est. 1-5 bar). The mould was removed and the mixture was then pressed for a total of 12 mins at a temperature of 200 ºC (internal temperature of 115-125 ºC) with 25 bars pressure. The resulting core layer was removed from the press. The core layer had a flexural strength of 10-20 MPa.

### Forming the layered structure

The core layer thus obtained was sandwiched between two impregnated hemp mats as described in Example 2.

### Curing the layered structure to obtain a panel

The resulting layered structure was preheated to 80 ºC for 1 hour. The structure was then pressed for a total of 12 mins at a temperature of 155 ºC (internal temperature of 115-125 ºC) with 25 bars pressure. The so-obtained sandwich panel had a smooth and homogenous surface, as determined by touch and visual inspection.

The panel was then subjected to a post-curing step as follows: The panel was placed in an oven, pre-heated at 120 ºC and cured at that temperature for 30 minutes, followed by curing at 160 ºC for 105 mins.

The final panel had a smooth and homogenous surface, with good hardness and flexural strength (up to 40 MPa) and good water resistance.

## Claims

1. Panel comprising a core layer and at least one surface layer bonded to the core layer, wherein the core layer comprises particulate material bonded with a resin and the surface layer comprises fibrous material bonded with a resin, the resins comprising a polymer derived from an aliphatic polyol with 2-15 carbon atoms and an aliphatic polycarboxylic acid with 3-15 carbon atoms, wherein the polymer has an extent of polymerization, determined gravimetrically, of at least 0.6, and wherein the ratio of the resin content (in wt.%) of the core layer to the total resin content (in wt.%) of the surface layer(s) is in the range of 1:1.5to 1:15.

2. Panel according to claim 1, wherein the core layer is arranged between one or two surface layers, preferably between two surface layers.

3. Panel according to claim 1 or 2, wherein the core layer has a thickness of at least 1.5 mm, in particular at least 2 mm, more in particular at least 4 mm and/or at most 20 cm, in particular at most 10 cm, more in particular at most 5 cm, even more in particular at most 3 cm; and/or
wherein the thickness of the surface layer(s) is at least 0.3 mm, in particular at least 0.5 mm, more in particular greater than 1 mm, even more in particular at least 1.1 mm and/or at most 20 mm, more in particular at most 10 mm, even more in particular at most 5 mm, still more in particular less than 5 mm.

4. Panel according to any one of the preceding claims, wherein the core layer has a density in the range of 0.1 g/cm³ to 1.4 g/cm³, preferably 0.3 g/cm³ to 1.4 g/cm³, more preferably 0.5 g/cm³ to 1.3 g/cm³.

5. Panel according to any one of the preceding claims, wherein the particulate material comprises at least 50 wt.% of particles having an aspect ratio of less than 500:1, preferably less than 100:1, more preferably less than 50:1, even more preferably less than 10:1.

6. Panel according to any one of the preceding claims, wherein the surface layer(s) comprises plant-derived fibers, preferably cellulosic and/or lignocellulosic fibers, more preferably flax, hemp, kenaf, jute, ramie, sisal, coconut, bamboo, and/or cotton fibers.

7. Panel according to any one of the preceding claims, wherein the fibrous material in the surface layer(s) comprises fibers having a length, determined along their longest axis, of at least 1 cm, preferably at least 2 cm, preferably at least 3 cm, more preferably at least 4 cm, and/or at most 20 cm, preferably at most 10 cm.

8. Panel according to any one of the preceding claims, wherein the sides of the panel are covered with surface layer.

9. Panel according to any one of the preceding claims, wherein
the resin content of the panel is in the range of 10-60 wt.%, preferably 15-50 wt.%, more preferably 15-40 wt.%, calculated on the total weight of the panel, and/or
the resin content of the core layer is in the range of 1-40 wt.%, preferably 2-30 wt.%, more preferably in the range of 5-20 wt.%, calculated on the total weight of the particulate material and the resin, and/or
the resin content of the surface layer(s) is 10-90 wt.%, preferably 20-80 wt.%, more preferably 30-70 wt.%, even more preferably 40-60 wt.%, calculated on the total weight of the fibrous material and the resin.

10. Panel according to any one of the preceding claims, wherein the ratio of the resin content (in wt.%) of the core layer to the total resin content (in wt.%) of the surface layer(s) may be in the range 1:1.5 to 1:10, more in particular 1:2 to 1:8.

11. Panel according to any one of the preceding claims, wherein the ratio of the thickness of the core layer to the total thickness of the surface layer(s) is in the range of 1:1 to 150:1, more preferably in the range of 1:1 to 50:1, more preferably 1:1 to 25:1, more preferably 2:1 to 25:1, more preferably 3:1 to 25:1, more preferably 5:1 to 20:1.

12. Panel according to any one of the preceding claims, wherein
the polycarboxylic acid comprises at least 10 wt.% of tricarboxylic acid, in particular at least 30 wt.% of tricarboxylic acid, calculated on the total amount of polyacid, preferably at least 50 wt.%, more in particular at least 70 wt.%, still more in particular at least 90 wt.%, or even at least 95 wt.%, the tricarboxylic acid preferably being citric acid, and/or
the polyol consists for at least 50 mole% of glycerol, xylitol, sorbitol, or mannitol, in particular of glycerol, preferably at least 70 mole%, more in particular at least 90 mole%, or even at least 95 mole%.

13. Method of manufacturing a panel according to any one of the preceding claims comprising the steps of
- providing a core layer base by combining particulate material and polymer derived from an aliphatic polyol with 2-15 carbon atoms and an aliphatic polycarboxylic acid with 3-15 carbon atoms, or precursors thereof;
- optionally, curing the core layer base under pressure to form a core layer comprising polymer with an extent of polymerization of at least 0.6;
- providing a surface layer base by combining fibrous material and polymer derived from an aliphatic polyol with 2-15 carbon atoms and an aliphatic polycarboxylic acid with 3-15 carbon atoms, or precursors thereof;
- combining the core layer base or core layer and at least one surface layer base to form a layered structure; and
- subjecting the layered structure to a curing step under pressure, wherein the curing step comprises curing the layered structure at an internal temperature of 100 to 220 °C for 5 seconds to 12 hours, to obtain a panel comprising polymer having an extent of polymerization, determined gravimetrically, of at least 0.6.

14. Method according to claim 13, wherein the layered structure comprises a core layer base and at least one surface layer base, each base independently comprising a polymer having an extent of polymerization of at most 0.8.

15. Method according to claim 14, wherein, prior to formation of the layered structure, the core layer base is subjected to a curing step under pressure to form a core layer comprising a polymer with an extent of polymerization of 0.6 to 0.8, optionally wherein the combining the core layer and the at least one surface layer base is such that the core layer is arranged between two surface layer bases.

## Patentansprüche

1. Paneel, umfassend eine Kernschicht und mindestens eine an die Kernschicht gebundene Oberflächenschicht, wobei die Kernschicht teilchenförmiges Material umfasst, das mit einem Harz gebunden ist, und die Oberflächenschicht faserförmiges Material umfasst, das mit einem Harz gebunden ist, wobei die Harze ein Polymer umfassen, das von einem aliphatischen Polyol mit 2-15 Kohlenstoffatomen und einer aliphatischen Polycarbonsäure mit 3-15 Kohlenstoffatomen abgeleitet ist, wobei das Polymer einen Polymerisationsgrad, gravimetrisch bestimmt, von mindestens 0,6 aufweist und wobei das Verhältnis des Harzgehalts (in Gew.-%) der Kernschicht zu dem Gesamtharzgehalt (in Gew.-%) der Oberflächenschicht(en) im Bereich von 1:1,5 bis 1:15 liegt.

2. Paneel nach Anspruch 1, wobei die Kernschicht zwischen einer oder zwei Oberflächenschichten, vorzugsweise zwischen zwei Oberflächenschichten, angeordnet ist.

3. Paneel nach Anspruch 1 oder 2, wobei die Kernschicht eine Dicke von mindestens 1,5 mm, insbesondere mindestens 2 mm, noch mehr insbesondere mindestens 4 mm und/oder höchstens 20 cm, insbesondere höchstens 10 cm, noch mehr insbesondere höchstens 5 cm, sogar noch mehr insbesondere höchstens 3 cm aufweist; und/oder
wobei die Dicke der Oberflächenschicht(en) mindestens 0,3 mm, insbesondere mindestens 0,5 mm, noch mehr insbesondere mehr als 1 mm, sogar noch mehr insbesondere mindestens 1,1 mm und/oder höchstens 20 mm, noch mehr insbesondere höchstens 10 mm, sogar noch mehr insbesondere höchstens 5 mm, noch weiter insbesondere weniger als 5 mm beträgt.

4. Paneel nach einem der vorhergehenden Ansprüche, wobei die Kernschicht eine Dichte im Bereich von 0,1 g/cm³ bis 1,4 g/cm³, vorzugsweise 0,3 g/cm³ bis 1,4 g/cm³, stärker bevorzugt 0,5 g/cm³ bis 1,3 g/cm³ aufweist.

5. Paneel nach einem der vorhergehenden Ansprüche, wobei das teilchenförmige Material mindestens 50 Gew.-% Teilchen mit einem Seitenverhältnis von weniger als 500:1, vorzugsweise weniger als 100:1, stärker bevorzugt weniger als 50:1, besonders bevorzugt weniger als 10:1 umfasst.

6. Paneel nach einem der vorhergehenden Ansprüche, wobei die Oberflächenschicht(en) von Pflanzen abgeleitete Fasern, vorzugsweise Cellulose- und/oder Lignocellulosefasern, stärker bevorzugt Flachs-, Hanf-, Kenaf-, Jute-, Ramie-, Sisal-, Kokosnuss-, Bambusund/oder Baumwollfasern, umfassen.

7. Paneel nach einem der vorhergehenden Ansprüche, wobei das faserförmige Material in der/den Oberflächenschicht(en) Fasern mit einer Länge, entlang ihrer längsten Achse bestimmt, von mindestens 1 cm, vorzugsweise mindestens 2 cm, vorzugsweise mindestens 3 cm, stärker bevorzugt mindestens 4 cm und/oder höchstens 20 cm, vorzugweise höchstens 10 cm, umfasst.

8. Paneel nach einem der vorhergehenden Ansprüche, wobei die Seiten des Paneels mit Oberflächenschicht bedeckt sind.

9. Paneel nach einem der vorhergehenden Ansprüche, wobei
der Harzgehalt des Paneels im Bereich von 10-60 Gew.-%, vorzugsweise 15-50 Gew.-%, stärker bevorzugt 15-40 Gew.-%, berechnet bezogen auf das Gesamtgewicht des Paneels, liegt und/oder
der Harzgehalt der Kernschicht im Bereich von 1-40 Gew.-%, vorzugsweise 2-30 Gew.-%, stärker bevorzugt im Bereich von 5-20 Gew.-%, berechnet bezogen auf das Gesamtgewicht des teilchenförmigen Materials und des Harzes, liegt und/oder
der Harzgehalt der Oberflächenschicht(en) 10-90 Gew.-%, vorzugsweise 20-80 Gew.-%, stärker bevorzugt 30-70 Gew.-%, besonders bevorzugt 40-60 Gew.-%, berechnet bezogen auf das Gesamtgewicht des faserförmigen Materials und des Harzes, liegt.

10. Paneel nach einem der vorhergehenden Ansprüche, wobei das Verhältnis des Harzgehalts (in Gew.-%) der Kernschicht zu dem Gesamtharzgehalt (in Gew.-%) der Oberflächenschicht(en) im Bereich 1:1,5 bis 1:10, noch mehr insbesondere 1:2 bis 1:8 liegen kann.

11. Paneel nach einem der vorhergehenden Ansprüche, wobei das Verhältnis der Dicke der Kernschicht zur Gesamtdicke der Oberflächenschicht(en) im Bereich von 1:1 bis 150:1, stärker bevorzugt im Bereich von 1:1 bis 50:1, stärker bevorzugt 1:1 bis 25:1, stärker bevorzugt 2:1 bis 25:1, stärker bevorzugt 3:1 bis 25:1, stärker bevorzugt 5:1 bis 20:1 liegt.

12. Paneel nach einem der vorhergehenden Ansprüche, wobei
die Polycarbonsäure mindestens 10 Gew.-% Tricarbonsäure, insbesondere mindestens 30 Gew.-% Tricarbonsäure, berechnet ausgehend von der Gesamtmenge an Polysäure, bevorzugt mindestens 50 Gew.-%, mehr insbesondere mindestens 70 Gew.-%, noch mehr insbesondere mindestens 90 Gew.-%, oder sogar mindestens 95 Gew.-%, umfasst, wobei die Tricarbonsäure vorzugsweise Citronensäure ist, und/oder
das Polyol zu mindestens 50 Mol-% aus Glycerin, Xylit, Sorbit oder Mannit, insbesondere aus Glycerin, vorzugsweise mindestens 70 Mol-%, noch mehr insbesondere mindestens 90 Mol-%, oder sogar mindestens 95 Mol-% besteht.

13. Verfahren zur Herstellung eines Paneels nach einem der vorhergehenden Ansprüche, umfassend die Schritte
- Bereitstellen einer Kernschichtbasis durch Vereinigen von teilchenförmigem Material und Polymer, das von einem aliphatischen Polyol mit 2-15 Kohlenstoffatomen und einer aliphatischen Polycarbonsäure mit 3-15 Kohlenstoffatomen abgeleitet ist, oder Vorstufen davon;
- gegebenenfalls Härten der Kernschichtbasis unter Druck, um eine Kernschicht zu bilden, die Polymer mit einem Polymerisationsgrad von mindestens 0,6 umfasst;
- Bereitstellen einer Oberflächenschichtbasis durch Vereinigen von faserförmigem Material und Polymer, das von einem aliphatischen Polyol mit 2-15 Kohlenstoffatomen und einer aliphatischen Polycarbonsäure mit 3-15 Kohlenstoffatomen abgeleitet ist, oder Vorstufen davon;
- Vereinigen der Kernschichtbasis oder Kernschicht und mindestens einer Oberflächenschichtbasis, um eine geschichtete Struktur zu bilden; und
- Unterziehen der geschichteten Struktur einem Härtungsschritt unter Druck, wobei der Härtungsschritt Härten der geschichteten Struktur bei einer Innentemperatur von 100 bis 220°C für 5 Sekunden bis 12 Stunden umfasst, um ein Paneel zu erhalten, das Polymer mit einem Polymerisationsgrad, gravimetrisch bestimmt, von mindestens 0,6 umfasst.

14. Verfahren nach Anspruch 13, wobei die geschichtete Struktur eine Kernschichtbasis und mindestens eine Oberflächenschichtbasis umfasst, wobei jede Basis unabhängig ein Polymer mit einem Polymerisationsgrad von höchstens 0,8 umfasst.

15. Verfahren nach Anspruch 14, wobei vor der Bildung der geschichteten Struktur die Kernschichtbasis einem Härtungsschritt unter Druck unterzogen wird, um eine Kernschicht zu bilden, die ein Polymer mit einem Polymerisationsgrad von 0,6 bis 0,8 umfasst, wobei gegebenenfalls das Vereinigen der Kernschicht und der mindestens einen Oberflächenschichtbasis derart ist, dass die Kernschicht zwischen zwei Oberflächenschichtbasen angeordnet ist.

## Revendications

1. Panneau comprenant une couche centrale et au moins une couche de surface liée à la couche centrale, dans lequel la couche centrale comprend un matériau particulaire lié à une résine et la couche de surface comprend un matériau fibreux lié à une résine, les résines comprenant un polymère dérivé d'un polyol aliphatique avec 2 à 15 atomes de carbone et un acide polycarboxylique aliphatique avec 3 à 15 atomes de carbone, dans lequel le polymère présente une étendue de polymérisation, déterminée par gravimétrie, d'au moins 0,6, et dans lequel le rapport entre la teneur en résine (en % en poids) de la couche centrale et la teneur en résine totale (en % en poids) de la/des couche(s) de surface est dans la plage de 1:1,5 à 1:15.

2. Panneau selon la revendication 1, dans lequel la couche centrale est agencée entre une ou deux couches de surface, de préférence entre deux couches de surface.

3. Panneau selon la revendication 1 ou 2, dans lequel la couche centrale présente une épaisseur d'au moins 1,5 mm, particulièrement d'au moins 2 mm, plus particulièrement d'au moins 4 mm et/ou d'au plus 20 cm, particulièrement d'au plus 10 cm, plus particulièrement d'au plus 5 cm, encore plus particulièrement d'au plus 3 cm ; et/ou
dans lequel l'épaisseur de la/des couche(s) de surface est d'au moins 0,3 mm, particulièrement d'au moins 0,5 mm, plus particulièrement de plus de 1 mm, encore plus particulièrement d'au moins 1,1 mm et/ou d'au plus 20 mm, plus particulièrement d'au plus 10 mm, encore plus particulièrement d'au plus 5 mm, voire de moins de 5 mm.

4. Panneau selon l'une quelconque des revendications précédentes, dans lequel la couche centrale présente une densité dans la plage de 0,1 g/cm³ à 1,4 g/cm³, de préférence de 0,3 g/cm³ à 1,4 g/cm³, de préférence encore de 0,5 g/cm³ à 1,3 g/cm³.

5. Panneau selon l'une quelconque des revendications précédentes, dans lequel le matériau particulaire comprend au moins 50 % en poids de particules présentant un facteur de forme de moins de 500:1, de préférence de moins de 100:1, de préférence encore de moins de 50:1, voire de moins de 10:1.

6. Panneau selon l'une quelconque des revendications précédentes, dans lequel la/les couche(s) de surface comprend/comprennent des fibres dérivées de plantes, de préférence des fibres cellulosiques et/ou lignocellulosiques, de préférence encore du lin, du chanvre, du kénaf, du jute, de la ramie, du sisal, de la noix de coco, du bambou, et/ou des fibres de coton.

7. Panneau selon l'une quelconque des revendications précédentes, dans lequel le matériau fibreux dans la/les couche(s) de surface comprend des fibres présentant une longueur, déterminée le long de leur axe le plus long, d'au moins 1 cm, de préférence d'au moins 2 cm, de préférence d'au moins 3 cm, de préférence encore d'au moins 4 cm, et/ou d'au plus 20 cm, de préférence d'au plus 10 cm.

8. Panneau selon l'une quelconque des revendications précédentes, dans lequel les côtés du panneau sont couverts d'une couche de surface.

9. Panneau selon l'une quelconque des revendications précédentes, dans lequel
la teneur en résine du panneau est dans la plage de 10 à 60 % en poids, de préférence de 15 à 50 % en poids, de préférence encore de 15 à 40 % en poids, calculés sur le poids total du panneau, et/ou
la teneur en résine de la couche centrale est dans la plage de 1 à 40 % en poids, de préférence de 2 à 30 % en poids, de préférence encore dans la plage de 5 à 20 % en poids, calculés sur le poids total du matériau particulaire et de la résine, et/ou
la teneur en résine de la/des couche(s) de surface est de 10 à 90 % en poids, de préférence de 20 à 80 % en poids, de préférence encore de 30 à 70 % en poids, voire de 40 à 60 % en poids, calculés sur le poids total du matériau fibreux et de la résine.

10. Panneau selon l'une quelconque des revendications précédentes, dans lequel le rapport entre la teneur en résine (en % en poids) de la couche centrale et la teneur en résine totale (en % en poids) de la/des couche(s) de surface peut être dans la plage de 1:1,5 à 1:10, plus particulièrement de 1:2 à 1:8.

11. Panneau selon l'une quelconque des revendications précédentes, dans lequel le rapport entre l'épaisseur de la couche centrale et l'épaisseur totale de la/des couche(s) de surface est dans la plage de 1:1 à 150:1, de préférence encore dans la plage de 1:1 à 50:1, de préférence encore de 1:1 à 25:1, de préférence encore de 2:1 à 25:1 ; de préférence encore de 3:1 à 25:1 ; de préférence encore de 5:1 à 20:1.

12. Panneau selon l'une quelconque des revendications précédentes, dans lequel
l'acide polycarboxylique comprend au moins 10 % en poids d'acide tricarboxylique, en particulier au moins 30 % en poids d'acide tricarboxylique, calculés sur la quantité totale de polyacide, de préférence au moins 50 % en poids, plus particulièrement au moins 70 % en poids, voire au moins 90 % en poids, ou même au moins 95 % en poids, l'acide tricarboxylique étant de l'acide citrique, et/ou le polyol est constitué pour au moins 50 % mol de glycérol, de xylitol, de sorbitol, ou de mannitol, en particulier de glycérol, de préférence au moins 70 % mol, plus particulièrement au moins 90 % mol, ou même au moins 95 % mol.

13. Procédé de fabrication d'un panneau selon l'une quelconque des revendications précédentes comprenant les étapes de
- fourniture d'une base de couche centrale par la combinaison de matériau particulaire et de polymère dérivé d'un polyol aliphatique avec 2 à 15 atomes de carbone et d'un acide polycarboxylique aliphatique avec 3 à 15 atomes de carbone, ou des précurseurs de ceux-ci ;
- optionnellement, durcissement de la base de couche centrale sous pression pour former une couche centrale comprenant un polymère avec une étendue de polymérisation d'au moins 0,6 ;
- fourniture d'une base de couche de surface par la combinaison de matériau fibreux et de polymère dérivé d'un polyol aliphatique avec 2 à 15 atomes de carbone et d'un acide polycarboxylique aliphatique avec 3 à 15 atomes de carbone, ou des précurseurs de ceux-ci ;
- combinaison de la base de couche centrale ou couche centrale et d'au moins une base de couche de surface pour former une structure en couches ; et
- soumission de la structure en couches à une étape de durcissement sous pression, dans lequel l'étape de durcissement comprend le durcissement de la structure en couches à une température interne de 100 à 220 °C pendant 5 secondes à 12 heures, pour obtenir un panneau comprenant un polymère présentant une étendue de polymérisation, déterminée par gravimétrie, d'au moins 0,6.

14. Procédé selon la revendication 13, dans lequel la structure en couches comprend une base de couche centrale et au moins une base de couche de surface, chaque base comprenant indépendamment un polymère présentant une étendue de polymérisation d'au plus 0,8.

15. Procédé selon la revendication 14, dans lequel, avant la formation de la structure en couches, la base de couche centrale est soumise à une étape de durcissement sous pression pour former une couche centrale comprenant un polymère avec une étendue de polymérisation de 0,6 à 0,8, optionnellement dans lequel la combinaison de la couche centrale et de l'au moins une base de couche de surface est telle que la couche centrale est agencée entre deux bases de couche de surface.
